(19) Europäisches Patentamt
European Patent Office
Office européen des brevets

(11) Veröffentlichungsnummer: **0 215 235**
**B1**

(12) # EUROPÄISCHE PATENTSCHRIFT

(45) Veröffentlichungstag der Patentschrift: **25.01.89**

(51) Int. Cl.⁴: **C 07 F 9/65,** A 01 N 57/16, C 07 F 9/14, C 07 F 9/20

(21) Anmeldenummer: **86109960.4**

(22) Anmeldetag: **21.07.86**

(54) **Phosphorsäureester.**

(30) Priorität: **02.08.85 DE 3527861**

(43) Veröffentlichungstag der Anmeldung: **25.03.87 Patentblatt 87/13**

(45) Bekanntmachung des Hinweises auf die Patenterteilung: **25.01.89 Patentblatt 89/4**

(84) Benannte Vertragsstaaten: **AT BE CH DE FR GB IT LI NL**

(56) Entgegenhaltungen:
**EP-A-0 167 888**
**EP-A-0 167 893**
**DE-A-2 643 262**
**DE-A-3 316 891**
**FR-A-2 120 251**
**US-A-4 182 733**
**US-A-4 558 039**

(73) Patentinhaber: **BAYER AG, Konzernverwaltung RP Patentabteilung, D-5090 Leverkusen 1 Bayerwerk (DE)**

(72) Erfinder: **Maurer, Fritz, Dr., Roeberstrasse 8, D-5600 Wuppertal 1 (DE)**
Erfinder: **Homeyer, Bernhard, Dr., Obere Strasse 28, D-5090 Leverkusen 3 (DE)**
Erfinder: **Stendel, Wilhelm, Dr., In den Birken 55, D-5600 Wuppertal 1 (DE)**

**EP 0 215 235 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft neue Pyrimidin-5-yl-(thiono)phosphorsäureester, ein Verfahren zu ihrer Herstellung und ihre Verwendung in Schädlingsbekämpfungsmitteln, insbesondere als Insektizide und Nematizide.

Es ist bekannt, daß bestimmte Thionophosphorsäureester wie z. B. O-Ethyl-O-n-propyl-O-(2-i-propyl-pyrimidin-5-yl)- und O,O-Diethyl-O-(2-tert.-butyl-pyrimidin-5-yl)-thionophosphorsäureester (vgl. z. B. DE-OS-2 643 262 und US-PS 4 429 125 sowie die gemäß Art 54 (3) EPÜ zum Stand der Technik gehörenden EP-A-0 167 888 und EP-A-0 167 893) sehr gute insektizide und nematizide Eigenschaften aufweisen.

Es wurden nun neue Pyrimidin-5-yl-(thiono)phosphorsäure-ester der Formel (I) gefunden,

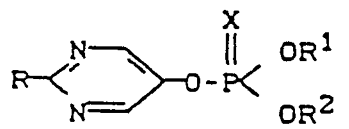

(I)

in welcher

R für Wasserstoff, $C_1$-$C_4$-Alkyl, $C_3$-$C_6$-Cycloalkyl, $C_1$-$C_4$-Alkoxy, $C_1$-$C_4$-Alkylthio, $C_1$-$C_4$-Alkylamino, Di($C_1$-$C_4$)-alkylamino oder Phenyl steht,
$R^1$ für $C_1$-$C_4$-Alkyl steht,
$R^2$ für Fluor-$C^1$-$C_4$-alkyl mit 1 bis 6 Fluoratomen steht und
X für Sauerstoff oder Schwefel steht.

Weitherhin wurde gefunden, daß man die neuen substituierten Pyrimidin-5-yl- (thiono)phosphorsäureester der Formel (I) erhält, wenn man 5-Hydroxypyrimidine der Formel (II),

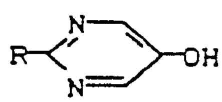

(II)

in welcher
R die oben angegebene Bedeutung hat,
oder die entsprechenden Alkalimetall-, Erdalkalimetall- oder Ammoniumsalze mit Halogeniden der Formel (III),

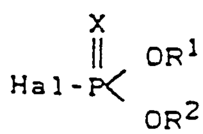

(III)

in welcher

X, $R^1$ und $R^2$ die oben angegebenen Bedeutungen haben und
Hal für Halogen steht,

gegebenenfalls in Gegenwart eines Säureakzeptors und gegebenenfalls in Gegenwart eines Verdünnungsmittels umsetzt.

Die neuen Pyrimidin-5-yl-(thiono)phosphorsäureester Formel (I) zeichnen sich in überragender Weise durch eine besonders niedrige Toxizität und eine sehr gute nematizide und insektizide Wirkung aus.

Die Alkylreste R und $R^1$ sowie die Alkylteile der Alkoxy-, Alkylthio-, Alkylamino- und Dialkylaminoreste R können verzweigt oder unverzweigt sein und enthalten 1 bis 4 Kohlenstoffatome. Beispielhaft seien genannt: Methyl, Ethyl-, n-Propyl, iso-Propyl, n-Butyl, iso-Butyl, sec.-Butyl, tert.-Butyl, Methoxy, Ethoxy, n-propoxy, iso-Propoxy, n-Butoxy, sec.-Butoxy, iso-Butoxy, tert.-Butoxy, Methylthio, Ethylthio, n-Propylthio, iso-Propylthio, n-Butylthio, iso-Butylthio, sec.-Butylthio, tert.-Butylthio, (Di)Methylamino, (Di)Ethylamino, (Di)n-Propylamino, (Di)iso-Propylamino, (Di)n-Butylamino, (Di)iso-Butylamino, (Di)sec.-Butylamino oder (Di)tert.-Butylamino, Methyl-Ethylamino oder Methyl-n-Propylamino.

Die Cycloalkylreste R enthalten 3 bis 6 Kohlenstoffatome. Beispielhaft seien genannt: Cyclopropyl, Cyclobutyl, Cyclopentyl und Cyclohexyl.

Der Fluoralkyrest $R^2$ kann verzweigt oder unverzweigt sein und enthält 1 bis 4 Kohlenstoffatome und 1 bis 6 und bevorzugt 1 bis 4 Fluoratome. Beispielhaft seien genannt:

Trifluormethyl, 2,2,2-Trifluorethyl, Difluorethyl, 3,3,3-Trifluor-1-propyl, 2,2,3,3-Tetrafluor-1-propyl, 1,1,1,3,3,3-Hexafluor-2-propyl, 2-Trifluormethyl-2-propyl und 2,2,3,4,4,4-Hexafluor-1-butyl.

X steht vorzugsweise für Schwefel.

Die Erfindung betrifft vorzugsweise Verbindungen der Formel (I), in welcher

R für Wasserstoff, $C_1$-$C_4$-Alkyl, $C_3$-$C_6$-Cycloalkyl, $C_1$-$C_4$-Alkoxy, $C_1$-$C_4$-Alkylthio, $C_1$-$C_4$-Alkylamino, Di-($C_1$-$C_4$)alkylamino oder Phenyl steht,
$R^1$ für $C_1$-$C_4$- Alkyl steht,
$R^2$ für Trifluormethyl, 2,2,2-Trifluorethyl, 2,2,3,3-Tetrafluorpropyl und 1,1,1,3,3,3-Hexafluor-2-propyl steht und
X für Sauerstoff oder Schwefel (vorzugsweise Schwefel) steht,

Ganz besonders bevorzugt sind Verbindungen der Formel (I), in welcher

R für Wasserstoff $C_1$-$C_4$-Alkyl, Cyclohexyl, Methoxy, Methylthio, i-Propylthio, Dimethylamino oder Diethylamino oder Phenyl steht,
$R^1$ für Methyl, Ethyl oder i-Propyl steht,
$R^2$ für 2,2,2-Trifluorethyl, 2,2,3,3-Tetrafluorpropyl oder 1,1,1,3,3,3-Hexafluor-2-propyl steht und
X für Sauerstoff oder Schwefel (vorzugsweise Schwefel) steht.

Verwendet man beispielsweise für das erfindungsgemäße Verfahren O-Ethyl-O-(2,2,2-trifluorethyl)-thionophosphorsäurediesterchlorid und 5-Hydroxy-2-phenyl-pyrimidin als Ausgangsstoffe, so kann die entsprechende Reaktion durch das folgende Formelschema skizziert werden:

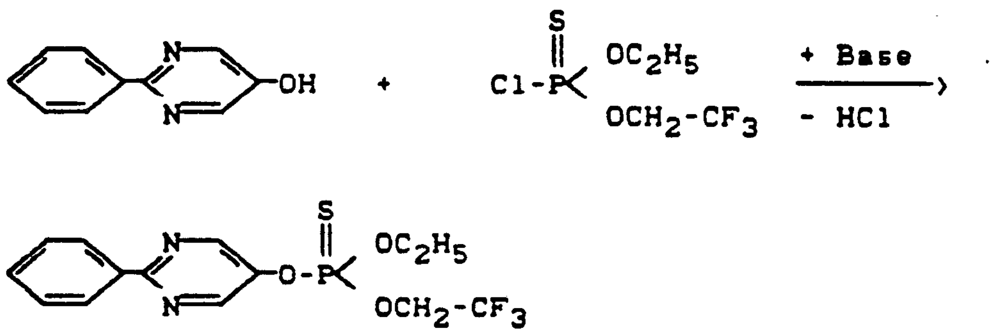


Die beim erfindungsgemäßen Verfahren als Ausgangsstoffe für die Herstellung der neuen Verbindungen der Formel (I) einzusetzenden 5-Hydroxypyrimidine bzw. die entsprechenden Alkalimetall-, Erdalkalimetall- oder Ammoniumsalze sind durch die Formel (II) definiert. In dieser Formel steht R für diejenigen Reste, welche oben bei der Definition in Formel (I) angegeben sind. Als Alkali- oder Erdalkalimetallsalze werden vorzugsweise die Natrium-, Kalium- oder Calciumsalze eingesetzt.

Die Verbindungen der Formel (II) sind bekannt und/oder können nach allgemein bekannten Verfahren und Methoden hergestellt werden (vgl. z. B. DE-OS-2 643 262, DE-OS-2 706 127 und J. Chem. Soc. 1960, 4590).

Als Beispiele für die Verbindungen der Formel (II) seien genannt:

5-Hydroxy-pyrimidin, 2-Methyl-, 2-Ethyl-, 2-n-Propyl-, 2-i-Propyl-, 2-n-Butyl-, 2-i-Butyl-, 2-sec.-Butyl, 2-tert.-Butyl-, 2-Cyclopropyl-, 2-Cyclobutyl-, 2-Cyclopentyl-, 2-Cyclohexyl-, 2-Phenyl-, 2-Methoxy-, 2-Ethoxy-, 2-n-Propoxy-, 2-i-Propoxy-, 2-n-Butoxy-, 2-i-Butoxy-, 2-sec.-Butoxy-, 2-tert.-Butoxy-, 2-Methylthio-, 2-Ethylthio-, 2-n-Propylthio-, 2-i-Propylthio, 2-n-Butylthio-, 2-i-Butylthio-, 2-sec.-Butylthio-, 2-tert.-Butylthio-, 2-(Di)Methylamino-, 2-(Di)Ethylamino-, 2-(Di)n-Propylamino-, 2-(Di)i-Propylamino-, 2-(Di)n-Butylamino-, 2-sec.-Butylamino- und 2-tert.-Butylamino-5-hydroxypyrimidin bzw. die entsprechenden Natrium-, Kalium-, Calcium- und Ammoniumsalze.

Die außerdem als Ausgangsstoffe einzusetzenden Halogenide sind durch die Formel (III) definiert. In dieser Formel stehen X, $R^1$ und $R^2$ für diejenigen Reste, welche bei der Definition in Formel (I) angegeben sind. Hal steht in dieser Formel für Halogen, wie insbesondere Chlor oder Brom.

Die Verbindungen der Formel (III) sind bekannt und nach bekannten Verfahren erhältlich (vgl. DE-A-3 316 891). Sie lassen sich auf einfache Weise herstellen, indem man Dihalogenide der Formel (IV),

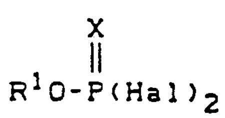 (IV) .

in welcher
$R^1$, X und Hal die oben angegebenen Bedeutungen haben, mit Alkoholen der Formel (V)

$$R^2OH \quad (V)$$

in welcher

$R^2$ die oben angegebene Bedeutung hat,

in Gegenwart von Säureakzeptoren, wie z. B. Kollidin, N,N-Dimethylanilin, Dimethylbenzylamin, Pyridin oder Triethylamin und in Gegenwart von inerten Verdünnungsmitteln, wie z. B. Toluol bei Temperaturen zwischen -10°C und +50°C in etwa molaren Mengen umsetzt.

Die Ausgangsverbindungen der Formel (IV) sind allgemein bekannte Verbindungen der organischen Chemie.

Als Beispiele für die Verbindungen der Formel (IV) seien genannt:

O-Methyl-, O-Ethyl-, O-n-Propyl-, O-i-Propyl-, O-n-Butyl-, O-i-Butyl-, O-sec.-Butyl- und O-tert.-Butyl-(thiono)phosphorsäureester-dichlorid bzw. -dibromid.

Die Ausgangsverbindungen der Formel (V) sind allgemein bekannte Verbindungen der organischen Chemie.

Als Beispiele für die Verbindungen der Formel (V) seien genannt:

Trifluormethanol, Difluormethanol, 2,2,2-Trifluoretha-nol, 3,3,3-Trifluorpropanol, 2,2,3,3-Tetrafluorpropanol, 1,1,1,3,3,3-Hexafluorpropan-2-ol, 3,3,3-Trifluor-propan-2-ol und 2,2,3,4,4,4-Hexafluorbutan-1-ol.

Als Beispiele für die Halogenide der Formel (III) seien genannt:

O-Methyl-O-trifluormethyl-, O-Ethyl-O-trifluormethyl-, O-n-Fropyl-O-trifluormethyl-, O-i-Propyl-O-trifluormethyl-, O-n-Butyl-O-trifluormethyl-, O-i-Butyl-O-trifluormethyl-, O-sec.-Butyl-O-trifluormethyl-, O-tert.-Butyl-O-trifluormethyl-, O-Methyl-O-difluormethyl-, O-Ethyl-O-difluormethyl-, O-n-Propyl-O-difluormethyl-, Oi-Propyl-O-difluormethyl-, O-n-Butyl-O-difluormethyl-, O-i-Butyl-O-difluormethyl-, O-sec.-Butyl-O-difluormethyl-, O-tert.-Butyl-O-difluormethyl-, O-Methyl-O-(2,2,2-tri-fluorethyl)-, O-Ethyl-O-(2,2,2-trifluorethyl)-, O-n-Pro-pyl-O-(2,2,2-trifluorethyl)-, O-i-Propyl-O-(2,2,2-tri-fluorethyl)-, O-n-Butyl-O-(2,2,2-trifluorethyl)-, O-i-Butyl-O-(2,2,2-trifluorethyl)-, O-sec.-Butyl-O-(2,2,2-trifluorethyl)-, O-tert.-Butyl-O-(2,2,2-trifluorethyl)-, O-Methyl-O-(3,3,3-trifluorpropyl)-, O-Ethyl-O-(3,3,3-trifluorpropyl)-, O-n-Propyl-O-(3,3,3-trifluorpropyl)-, O-i-Propyl-O-(3,3,3-trifluorpropyl)-, O-n-Butyl-O-(3,3,3-trifluorpropyl)-, O-i-Butyl-O-(3,3,3-trifluorpropyl)-, O-sec.-Butyl-O-(3,3,3-trifluorpropyl)-, O-Methyl-O-(2,2,3,3-tetrafluorpropyl)-, O-Ethyl-O-(2,2,3,3-tetra-fluorpropyl)-, O-n-Propyl-O-(2,2,3,3-tetrafluorpropyl)-, O-i-Propyl-O-(2,2,3,3-tetrafluorpropyl)-, O-n-Butyl-O-(2,2,3,3-tetrafluorpropyl)-, O-i-Butyl-O-(2,2,3,3-tetra-fluorpropyl)-, O-sec.-Butyl-O-(2,2,3,3-tetrafluorpropyl)-, O-Methyl-O-(1,1,1,3,3,3-hexafluor-2-propyl)-, O-Ethyl-O-(1,1,1,3,3,3-hexafluor-2-propyl)-, O-n-Propyl-O-(1,1, 1,3,3,3-hexafluor-2-propyl)-, O-n-Butyl-O-(1,1,1,3,3,3-hexafluor-2-propyl)-, O-Methyl-O-(3,3,3 -trifluor-2-pro-pyl)-, O-Ethyl-O-(3,3,3-trifluor-2-propyl)-, O-n-Pro-pyl-O-(3,3,3-trifluor-2-propyl)-, O-i-Propyl-O-(3,3,3-trifluor-2-propyl)-, O-n-Butyl-O- (3,3,3-tri-fluor-2-propyl)-, O-Methyl-O- (2,2,3,4,4,4- hexa-fluor-1-butyl)-, O-Ethyl-O-(2,2,3,4,4,4-hexafluor-1-butyl)-, O-n-Propyl-O-(2,2,3,4,4,4-hexafluor-1-butyl)-, O-i-Propyl-O-(2,2,3,4,4,4-hexafluor-1-bu-tyl)-, O-n-Butyl-O-(2,2,3,4,4,4-hexafluor-1-butyl)-, O-i-Butyl-O-(2,2,3,4,4,4-hexafluor-1-butyl)-, O-sec.-Butyl-O-(2,2,3,4,4,4-hexafluor-1-butyl)- und O-tert.-Butyl-O-(2,2,3,4,4,4-hexafluor-1-butyl)-(thiono)phos-phorsäreesterchlorid bzw. -bromid.

Das erfindungsgemäße Verfahren zur Herstellung der neuen Pyrimidin-5-yl-(thiono)phosphorsäureester der Formel (I) wird bevorzugt unter Verwendung von Verdünnungsmitteln durchgeführt. Als Verdünnungsmittel kommen praktisch alle inerten organischen Lösungsmittel in Frage.

Hierzu gehören insbesondere aliphatische oder aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol, o-Dichlorbenzol, Ether, wie Diethyl- oder Dibutylether, Glycoldimethylether und Diglykoldimethylether, Tetrahydrofuran und Dioxan, Ketone wie Aceton, Methylethyl-, Methylisopropyl- und Methylisobutylketon, Ester, wie Essigsäuremethylester und -ethylester, Nitrile, wie z. B. Acetonitril und Propionitril, Amide, wie z. B. Dimethylformamid, Dimethylacetamid und N-Methylpyrrolidon, sowie Dimethylsulfoxid, Tetramethylensulfon und Hexamethylphosphorsäuretriamid.

Das Verfahren kann gegebenenfalls in Gegenwart von Säureakzeptoren durchgeführt werden. Als Säureakzeptoren können alle üblichen Säurebindemittel Verwendung finden. Besonders bewährt haben sich Alkalicarbonate, wie Natrium- und Kaliumcarbonat, ferner aliphatische, aromatische oder heterocyclische Amine, beispielweise Triethylamin, Trimethylamin, Dimethylanilin, Dimethylbenzylamin und Pyridin.

Das erfindungsgemäße Verfahren wird im allgemeinen bei Temperaturen zwischen 0°C und 100°C durchgeführt. Bevorzugt wird der Bereich zwischen 15°C und 80°C. Die Umsetzungen werden im allgemeinen bei Normaldruck durchgeführt.

Zur Durchführung des erfindungsgemäßen Verfahrens werden die Ausgangsstoffe gewöhnlich annähernd in äquimolaren Mengen eingesetzt. Ein Überschuß der einen oder anderen Reaktionskomponente bringt keine wesentlichen Vorteile. Die Umsetzung wird im allgemeinen in einem geeigneten Verdünnungsmittel in Gegenwart eines Säureakzeptors durchgeführt und das Reaktionsgemisch wird mehrere Stunden bei der erforderlichen Temperatur gerührt. Danach gibt man ein organisches Lösungsmittel z. B. Toluol zu und arbeitet die organische Phase wie üblich durch Waschen, Trocknen und Abdestillieren des Lösungsmittels auf.

Die neuen Verbindungen fallen in Form von Ölen an, die sich zum Teil nicht unzersetzt destillieren lassen, jedoch durch sogenanntes "Andestillieren", d.h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dien der Brechungsindex.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu

den oben erwähnten Schädlingen gehören:

Aus der Ordnung der Isopoda z. B. Oniscus asellus, Armadillidium vulgare, Porcellio scaber.

Aus der Ordnung der Diplopoda z. B. Blaniulus guttulatus.

Aus der Ordnung der Chilopoda z. B. Geophilus carpophagus, Scutigera spec.

Aus der Ordnung der Symphyla z. B. Scutigerella immaculata.

Aus der Ordnung der Thysanura z. B. Lepisma saccharina.

Aus der Ordnung der Collembola z. B. Onychiurus armatus.

Aus der Ordnung der Orthoptera z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z. B. Forficula auricularia.

Aus der Ordnung der Isoptera z. B. Reticulitermes spp..

Aus der Ordnung der Anoplura z. B. Phylloxera vastatrix, Pemphigus spp., Pediculus humanus corporis, Haematopinus spp., Linognathus spp.

Aus der Ordnung der Mallophaga z. B. Trichodectes spp., Damalinea spp.

Aus der Ordnung der Thysanoptera z. B. Hercinothrips femoralis, Thrips tabaci.

Aus der Ordnung der Heteroptera z. B. Eurygaster spp., Dysdercus intermedius, Piesma quadrata, Cimex lectularius, Rhodnius prolixus, Triatoma spp.

Aus der Ordnung der Homoptera z. B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z. B. pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z. B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolonata melolonatha, Amphimallon solstitialis, Costelytra zealandica.

Aus der Ordnung der Hymenoptera z. B. Diprion spp., Hoplocampa spp., Lasius spp., Monomorium pharaonis, Vespa spp.

Aus der Ordnung der Diptera z. B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp-, Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z. B. Xenopsylla cheopis, Ceratophyllus spp..

Aus der Ordnung der Arachnida z. B. Scorpio maurus, Latrodectus mactans.

Aus der Ordnung der Acarina z. B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsatzen, wie Räucherpatronen, -dosen, -spiralen u.ä., sowie ULV-Kalt- und Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder

Methylenchlorid, aliphatische Kohlenwasserstoffe, wie Cyclohexan oder Paraffine, z. B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe sowie Butan, Propan, Stickstoff und Kohlendioxid; als feste Trägerstoffe kommen in Frage: z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in frage: z. B. nichtionogene und anionische Emulgatoren, wie Polyoxyethylen-Fettsäure-Ester, Polyoxyethylen-Fettalkohol-Ether, z. B. Alkylarylpolyglykol-Ether, Alkylsulfonate, Alkylsulfate, Arylsulfonate sowie Eiweißhydrolysate; als Dispergiermittel kommen in Frage: z. B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z. B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Wirkstoffe eignen sich auch zur Bekämpfung von Insekten, Milben, Zecken usw. auf dem Gebiet der Tierhaltung und Viehzucht, wobei durch die Bekämpfung der Schädlinge bessere Ergebnisse, z. B. höhere Milchleistungen, höheres Gewicht, schöneres Tierfell, längere Lebensdauer usw. erreicht werden können.

Die Anwendung der erfindungsgemäßen Wirkstoffe geschieht auf diesem Gebiet in bekannter Weise, wie durch äußerliche Anwendung in Form beispielsweise des Tauchens (Dippen), Sprühens (Sprayen), Aufgießens (pour-on and spot-on) und des Einpuderns.

Wie bereits oben erwähnt wurde, zeichnen sich die neuen Verbindungen der Formel (I) durch eine sehr niedrig liegende Warmblütertoxizität aus. Die bisher bekannten hochwirksamen Vertreter dieses Verbindungstyps hingegen weisen relativ hohe Toxizitätswerte auf, die ihre Anwendung in der Praxis erheblich erschweren. Die neuen und nematizide Wirksamkeit der vorbekannten Verbindungen, übertreffen diese jedoch um ein vielfaches in ihrer geringeren Warmblütertoxizität. Hierdurch werden Herstellung, Lagerung, Formulierung und Anwendung in hohem Maße erleichtert und vereinfacht. Es war überraschend und stand im Gegensatz zu der bisherigen Erfahrung der Fachwelt, daß die neuen Verbindungen der Formel (I) eine geringe Warmblütertoxizität aufweisen würden ohne daß sich ihre insektizide und nematizide Wirkung verringerte. Eigentlich wäre eine weitgehende Verringerung der insektiziden und nematiziden Wirksamkeiten zu erwarten gewesen.

Anhand der folgenden Beispiele soll die geringe Warmblütertoxizität der neuen Verbindungen der Folmel (I) sowie ihre hohe und breite Wirksamkeit gegen Insekten und Nematoden erläutert werden. In die Tests wurden teilweise die folgenden, aus DE-OS-2 643 262 und US-PS-4 429 125 bekannten, hochwirksamen Verbindungen mit einbezogen:

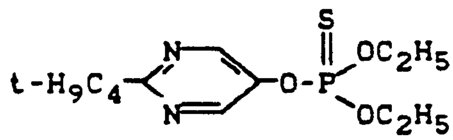

(A)

und

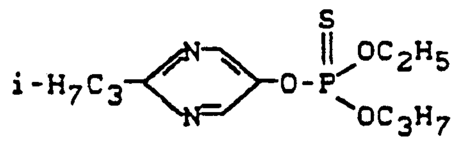

(B)

**Beispiel A**

Warmblütertoxizität $LD_{50}$-Werte an Ratten (oral)

| Wirkstoff | $LD_{50}$ (mg Wirkstoff/kg Körpergewicht) |
| --- | --- |
| 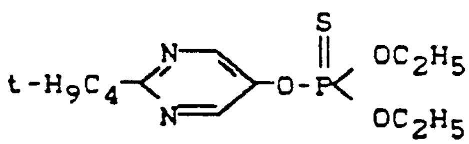 Vergleichsverbindung (A) | 1-2,5 |
| 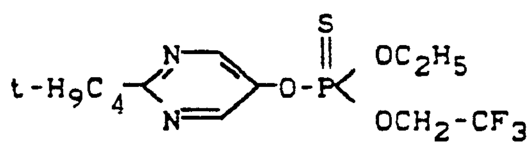 Verbindung aus Herstellungsbeispiel 1 | 100-250 |
| 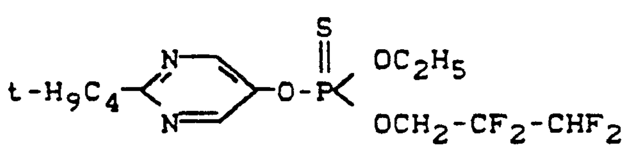 Verbindung aus Herstellungsbeispiel 2 | 50 |

Die Werte wurden in üblicher Weise ermittelt. Die Wirkstoffe wurden in Polyethylenglykol LUTROL (Warenzeichen der BASF AG, Ludwigshafen, Bundesrepublik Deutschland) gelöst und die Lösung den Ratten mit der Schlundsonde verabreicht.

**Beispiel B**

Grenzkonzentrations-Test / Bodeninsekten

| | |
|---|---|
| Testinsekt: | Phorbia antiqua-Maden (im Boden) |
| Lösungsmittel: | 3 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigen z. B. bei einer Wirkstoffkonzentration von 2,5 ppm die erfindungsgemäßen Verbindungen der Herstellungsbeispiele 1 und 2 sowie die bekannten Verbindungen (A) und (B) einen Wirkungsgrad von 95 %; 100 %; 100 % und 100 %.

**Beispiel C**

Grenzkonzentrations-Test / Bodeninsekten

| | |
|---|---|
| Testinsekt: | Diabrotica balteata - Larven im Boden |
| Lösungsmittel: | 3 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in 0,5 l Töpfe und läßt diese bei 20°C stehen.

Sofort nach dem Ansatz werden je Topf 6 vorgekeimte Maiskörner gelegt. Nach 2 Tagen werden in den behandelten Boden die entsprechenden Testinsekten gesetzt. Nach weiteren 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigen z. B. bei einer Wirkstoffkonzentration von 2,5 ppm die erfindungsgemäßen Verbindungen (1) und (2) sowie die bekannte Verbindung (A) einen Wirkungsgrad von 100 %.

**Beispiel D**

Grenzkonzentrations-Test / Nematoden

| | |
|---|---|
| Testnematode: | Meloidogyne incognita |
| Lösungsmittel: | 3 Gewichtsteile Aceton |
| Emulgator: | 1 Gewichtsteil Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27°C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden. Bei diesem Test zeigen z. B. bei einer Wirkstoffkonzentration von

20 ppm die erfindungsgemäßen Verbindungen (1) und (2) sowie die bekannten Verbindungen (A) und (B) einen Wirkungsgrad von 95 %, 100 %, 100 % und 95 %.

**Beispiel E**

Test mit Lucilia cuprina OP-res.-Larven

Emulgator: 35 Gewichtsteile Ethylenglykolmonoethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Lösungsmittel-Gemisches und verdünnt das so erhaltene Konzentrat mit Wasser auf die jeweils gewünschte Konzentration.

ETwa 20 Lucilia cuprina res.-Larven werden in ein Teströhrchen gebracht, welches ca. 1 $cm^2$ Pferdefleisch und 0,5 ml der Wirkstoffzubereitung enthält. Nach 24 Stunden wird der Abtötungsgrad bestimmt.

Bei diesem Test zeigt z. B. die folgende Verbindung (2) bei einer Wirkstoffkonzentration von 10 ppm eine Abtötung von 100 %.

**Beispiel F**

Test mit Psoroptes ovis

Lösungsmittel: 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Verdünnungsmittel-Gemisches und verdünnt das so erhaltene Konzentrat mit Wasser auf die gewünschte Konzentration.

Etwa 10-25 Psoroptes ovis werden in 1 ml der zu testenden Wirkstoffzubereitung gebracht, die in Tablettennester einer Tiefziehverpackung pipettiert wurden. Nach 24 Stunden wird der Abtötungsgrad bestimmt.

Bei diesem Test zeigt z. B. die folgende Verbindung (2) bei einer Wirkstoffkonzentration von 10 ppm eine Abtötung von 100 %.

**Herstellungsbeispiele**

**Beispiel 1**

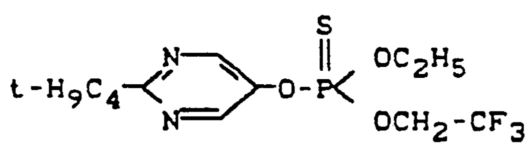

Eine Mischung aus 7,8 g (0,05 Mol) 2-tert.-Butyl-5-hydroxypyrimidin, 10,4 g (0,075 Mol) Kaliumcarbonat, 50 ml Acetonitril und 12,2 g (0,05 Mol) O-Ethyl-O-(2,2,2-trifluorethyl)-thionophosphorsäurediesterchlorid wird 18 Stunden bei 20°C gerührt. Nach Zugabe von 150 ml Toluol wird 3 mal mit je 100 ml Wasser extrahiert. Dann wird die organische Phase über Natriumsulfat getrocknet und das Lösungsmittel im Vakuum abdestilliert. Der Rückstand wird im Vakuum bei 80°C andestilliert.

Zurück bleiben 12,5 g (70 % der Theorie) O-Ethyl-O-(2,2,2-trifluorethyl)-0-(2-tert.-butyl-pyrimidin-5-yl)-thionophosphorsäureester in Form eines gelben Öles mit dem Brechungsindex $n_D^{21}$ : 1,4819.

Analog Beispiel 1 können die folgenden Verbindungen der Formel (I)

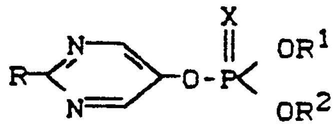

(I)

hergestellt werden:

| Bsp. Nr. | R | $R^1$ | $R^2$ | X | Brechungs-index |
|---|---|---|---|---|---|
| 2 | $t\text{-}C_4H_9$ | $C_2H_5$ | $CHF_2\text{-}CF_2\text{-}CH_2\text{-}$ | S | $nD^{22}$ : 1,4640 |
| 3 | $t\text{-}C_4H_9$ | $i\text{-}C_3H_7$ | $CF_3\text{-}CH_2\text{-}$ | S | $nD^{22}$ : 1,4652 |
| 4 | $t\text{-}C_4H_9$ | $i\text{-}C_3H_7$ | $CHF_2\text{-}CF_2\text{-}CH_2\text{-}$ | S | $nD^{22}$ : 1,4657 |
| 5 | H | $C_2H_5$ | $CF_3\text{-}CH_2\text{-}$ | S | |
| 6 | $CH_3$ | $C_2H_5$ | $CF_3\text{-}CH_2\text{-}$ | S | |
| 7 | 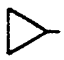 | $C_2H_5$ | $CF_3\text{-}CH_2\text{-}$ | S | $nD^{22}$ : 1,4775 |
| 8 | $i\text{-}C_3H_7$ | $C_2H_5$ | $CF_3\text{-}CH_2\text{-}$ | S | |
| 9 | 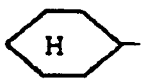 | $C_2H_5$ | $CF_3\text{-}CH_2\text{-}$ | S | |
| 10 | 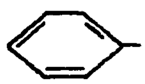 | $C_2H_5$ | $CF_3\text{-}CH_2\text{-}$ | S | $nD^{22}$ : 1,5630 |
| 11 | $t\text{-}C_4H_9$ | $C_2H_5$ | $CF_3\text{-}CH_2\text{-}$ | O | $nD^{22}$ : 1,4470 |
| 12 | $t\text{-}C_4H_9$ | $C_2H_5$ | $CHF_2\text{-}CF_2\text{-}CH_2\text{-}$ | O | $nD^{22}$ : 1,4384 |
| 13 | 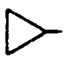 | $i\text{-}C_3H_7$ | $CHF_2\text{-}CF_2\text{-}CH_2\text{-}$ | S | |
| 14 | $t\text{-}C_4H_9$ | $CH_3$ | $CF_3\text{-}CH_2\text{-}$ | S | |
| 15 | $t\text{-}C_4H_9$ | $CH_3$ | $CHF_2\text{-}CF_2\text{-}CH_2\text{-}$ | S | |
| 16 | $t\text{-}C_4H_9$ | $C_2H_5$ | $(CF_3)_2CH\text{-}$ | S | |
| 17 | $SCH_3$ | $C_2H_5$ | $CF_3\text{-}CH_2\text{-}$ | S | |
| 18 | $OCH_3$ | $C_2H_5$ | $CF_3\text{-}CH_2\text{-}$ | S | |
| 19 | $SC_3H_7\text{-}i$ | $C_2H_5$ | $CF_2\text{-}CH_2\text{-}$ | S | |
| 20 | $N(CH_3)_2$ | $C_2H_5$ | $CF_3\text{-}CH_2\text{-}$ | S | |
| 21 | $N(CH_3)_2$ | $C_2H_5$ | $CHF_2\text{-}CF_2\text{-}CH_2\text{-}$ | S | |
| 22 | $N(C_2H_5)_2$ | $C_2H_5$ | $CF_3\text{-}CH_2\text{-}$ | S | |
| 23 | 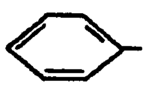 | $C_2H_5$ | $CHF_2\text{-}CF_2\text{-}CH_2\text{-}$ | S | $nD^{22}$ : 1,5300 |
| 24 | 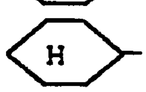 | $C_2H_5$ | $CHF_2\text{-}CF_2\text{-}CH_2\text{-}$ | S | |
| 25 | $i\text{-}C_3H_7$ | $C_2H_5$ | $CHF_2\text{-}CF_2\text{-}CH_2\text{-}$ | S | |
| 26 | $t\text{-}C_4H_9$ | $n\text{-}C_3H_7$ | $CF_3\text{-}CH_2\text{-}$ | S | |

**Ausgangsprodukte der Formel (III)**

Beispiel (III-1)

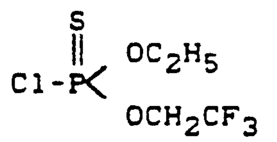

Zu einer Lösung von 89,5 g (0,5 Mol) O-Ethyl-thionophosphorsäureesterdichlorid in 300 ml Toluol tropft man bei 15-20°C unter leichtem Kühlen eine Mischung aus 60,5 g (0,5 Mol) Kollidin und 50 g (0,5 Mol) 2,2,2-Trifluorethanol. Das Reaktionsgemisch wird 24 Stunden bei 20°C nachgerührt, mit 100 ml Wasser, dann mit 100 ml 2 proz. Salzsäure und dreimal mit je 100 ml Wasser gewaschen, über Natriumsulfat getrocknet und im Vakuum eingedampft.

Man erhält so 75,8 g (62 % der Theorie) O-Ethyl-O-(2,2,2-trifluorethyl)-thionophosphorsäurediesterchlorid in Form eines farblosen Öles mit dem Siedepunkt 62-64°C/11 mbar.

Analog Beispiel (III-1) können die folgenden Verbindungen der Formel (III)

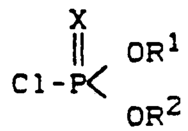

(III)

hergestellt werden:

| Bsp. Nr. | $R^1$ | $R^2$ | X | physikal. Konstante |
|---|---|---|---|---|
| III - 2 | $C_2H_5$ | $CHF_2-CF_2-CH_2-$ | S | Kp : 46 - 49°C/0,01 mbar |
| III - 3 | $i-C_3H_7$ | $CF_3-CH_2-$ | S | Kp : 68°C/14 mbar |
| III - 4 | $CH_3$ | $CF_3-CH_2-$ | S | |
| III - 5 | $C_2H_5$ | $CF_3-CH_2-$ | O | |
| III - 6 | $C_2H_5$ | $(CF_3)_2CH-$ | S | |
| III - 7 | $n-C_3H_7$ | $CF_3-CH_2-$ | S | |
| III - 8 | $i-C_3H_7$ | $CHF_2-CF_2-CH_2-$ | S | $nD^{21}$ : 1,4486 |

**Patentansprüche**

1. Pyrimidin-5-yl (thiono)phosphorsäureester der Formel (I)

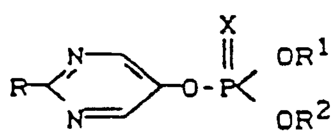

(I)

in welcher

- R für Wasserstoff, $C_1$-$C_4$-Alkyl, $C_3$-$C_6$-Cycloalkyl, $C_1$-$C_4$-Alkoxy, $C_1$-$C_4$-Alkylthio, $C_1$-$C_4$-Alkylamino, Di-($C_1$-$C_4$)-alkylamino oder Phenyl steht,
- $R^1$ für $C_1$-$C_4$-Alkyl steht,
- $R^2$ für Fluor-$C_1$-$C_4$-alkyl mit 1 bis 6 Fluoratomen steht und
- X für Sauerstoff oder Schwefel steht.

2. Verbindungen der Formel (I), gemäß Anspruch 1 in welcher

- R für Wasserstoff, $C_1$-$C_4$-Alkyl, $C_3$-$C_6$-Cycloalkyl, $C_1$-$C_4$-Alkoxy, $C_1$-$C_4$-Alkylthio, $C_1$-$C_4$-Alkylamino, Di($C_1$-$C_4$)-alkylamino oder Phenyl steht,
- $R^1$ für $C_1$-$C_4$-Alkyl steht,
- $R^2$ für Trifluormethyl, 2,2,2-Trifluorethyl, 2,2,3,3,-Tetrafluorpropyl und 1,1,1,3,3,3-Hexafluor-2-propyl steht und

X für Sauerstoff oder Schwefel steht.

3. Verbindungen der Formel (I), gemäß Anspruch 1, in welcher

R für Wasserstoff, $C_1$-$C_4$-Alkyl, Cyclohexyl, Methoxy, Methylthio, i-Propylthio, Dimethylamino oder Diethylamino oder Phenyl steht,
$R^1$ für Methyl, Ethyl oder i-Propyl steht,
$R^2$ für 2,2,2-Trifluorethyl, 2,2,3,3-Tetrafluorpropyl oder 1,1,1,3,3,3-Hexafluor-2-propyl steht und
X für Sauerstoff oder Schwefel (vorzugsweise Schwefel) steht.

4. Verbindungen der Formeln

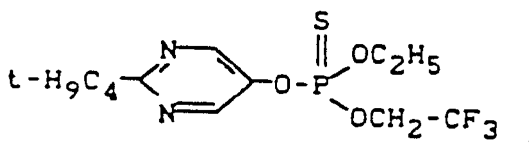

und

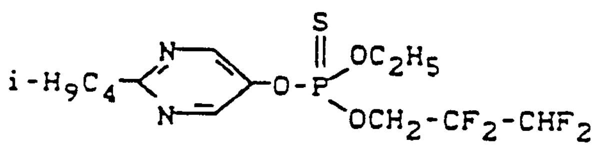

5. Verfahren zur Herstellung von Pyrimidin-5-yl-(thiono)phosphorsäureestern der Formel (I),

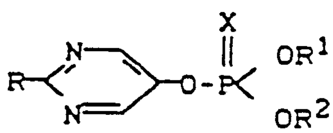

(I)

in welcher

R für Wasserstoff, $C_1$-$C_4$-Alkyl, $C_3$-$C_6$-Cycloalkyl, $C_1$-$C_4$-Alkoxy, $C_1$-$C_4$-Alkylthio, $C_1$-$C_4$-Alkylamino, Di-($C_1$-$C_4$)-alkylamino oder Phenyl steht,
$R^1$ für $C_1$-$C_4$-Alkyl steht,
$R^2$ für Fluor-$C_1$-$C_4$-alkyl mit 1 bis 6 Fluoratomen steht und
X für Sauerstoff oder Schwefel steht,

dadurch gekennzeichnet, daß man 5-Hydroxypyrimidine der Formel (II),

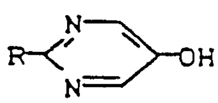

(II)

in welcher
R die oben angegebene Bedeutung hat,

oder die entsprechenden Alkalimetall-, Erdalkalimetall- oder Ammoniumsalze mit Halogeniden der Formel (III),

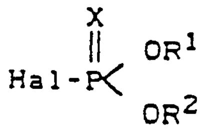

(III)

in welcher

X, $R^1$ und $R^2$ die oben angegebenen Bedeutungen haben und

Hal für Halogen steht,

gegebenenfalls in Gegenwart eines Säureakzeptors und gegebenenfalls in Gegenwart eines Verdünnungsmittels umsetzt.

6. Schädlingsbekämpfungsmittel, gekennzeichnet durch einen Gehalt an mindestens einer Verbindung der Formel (I) gemäß Anspruch 1 oder 5.

7. Verwendung von Verbindungen der Formel (I) gemäß Anspruch 1 oder 5 zur Bekämpfung von Schädlingen, insbesondere von Insekten und Nematoden.

8. Verfahren zur Bekämpfung von Schädlingen, dadurch gekennzeichnet, daß man Verbindungen der Formel (I) gemäß Anspruch 1 oder 5 auf die Schädlinge, vorzugsweise Insekten und Nematoden oder ihren Lebensraum einwirken läßt.

9. Verfahren zur Herstellung von Schädlingsbekämpfungsmitteln, dadurch gekennzeichnet, daß man Verbindungen der Formel (I) gemäß Anspruch 1 oder 5 mit Streckmitteln und/oder oberflächenaktiven Mitteln vermischt.

## Claims

1. Pyrimidin-5-yl-(thiono)phosphoric acid esters of the formula (I)

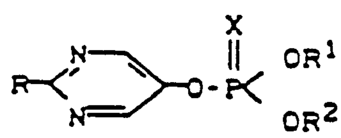

(I)

in which

R represents hydrogen, $C_1$-$C_4$-alkyl, $C_3$-$C_6$-cycloalkyl, $C_1$-$C_4$-alkoxy, $C_1$-$C_4$-alkylthio, $C_1$-$C_4$-alkylamino, di ($C_1$-$C_4$)-alkylamino or phenyl,

$R^1$ represents $C_1$-$C_4$-alkyl,

$R^2$ represents fluoro-$C_1$-$C_4$-alkyl having 1 to 6 fluorine atoms and

X stands for oxygen or sulphur

2. Compounds of the formula (I) according to Claim 1, in which

R represents hydrogen, $C_1$-$C_4$-alkyl, $C_3$-$C_6$-cycloalkyl, $C_1$-$C_4$-alkoxy, $C_1$-$C_4$-alkylthio, $C_1$-$C_4$-alkylamino, di-($C_1$-$C_4$)-alkylamino or phenyl,

$R^1$ represents $C_1$-$C_4$-alkyl,

$R^2$ represents trifluoromethyl, 2,2,2-trifluoroethyl, 2,2,3,3-tetrafluoropropyl or 1,1,1,3,3,3-hexafluoro-2-propyl and

X represents oxygen or sulphur

3. Compounds of the formula (I) according to Claim 1, in which

R represents hydrogen, $C_1$-$C_4$-alkyl, cyclohexyl, methoxy, methylthio, i-propylthio, dimethylamino or diethylamino or phenyl,

$R^1$ represents methyl, ethyl or i-propyl,

$R^2$ represents 2,2,2-trifluoroethyl, 2,2,3,3-tetrafluoropropyl or 1,1,1,3,3,3-hexafluoro-2-propyl and

X represents oxygen or sulphur (preferably sulphur).

4. Compounds of the formulae

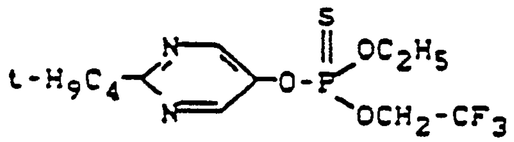

and

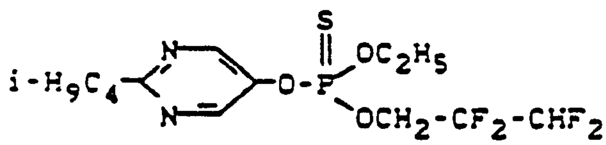

5. Process for the preparation of pyrimidin-5-yl-(thiono)phosphoric acid esters of the formula (I)

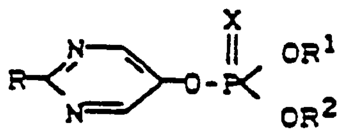

(I)

in which

R represents hydrogen, $C_1$-$C_4$-alkyl, $C_3$-$C_6$-cycloalkyl, $C_1$-$C_4$-alkoxy, $C_1$-$C_4$-alkylthio, $C_1$-$C_4$-alkylamino, di-$C_1$-$C_4$-alkylamino or phenyl,

$R^1$ represents $C_1$-$C_4$-alkyl,

$R^2$ represents fluoro-$C_1$-$C_4$-alkyl having 1-6 fluorine atoms and

X represents oxygen or sulphur,

characterized in that 5-hydroxypyrimidines of the formula (II)

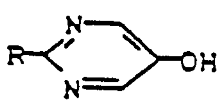

(II)

in which

R has the abovementioned meaning,

or the corresponding alkali metal, alkaline earth metal or ammonium salts, are reacted with halides of the formula (III) > > >

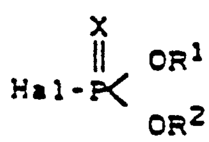

(III)

in which

X, $R^1$ and $R^2$ have the abovementioned meanings

and

Hal represents halogen,

if appropriate in the presence of an acid acceptor and if appropriate in the presence of a diluent.

6. Agents for combating pests, characterized in that they contain at least one compound of the formula (I) according to Claim 1 or 5.

7. Use of compounds of the formula (I) according to Claim 1 or 5 for combating pests, in particular insects and nematodes.

8. Method of combating pests, characterized in that compounds of the formula (I) according to Claim 1 or 5 are allowed to act on the pests, preferably insects and nematodes, or their environment.

9. Process for the preparation of agents for combating pests, characterized in that compounds of the formula (I) according to Claim 1 or 5 are mixed with extenders and/or surface-active agents.

**Revendications**

1. Esters (thiono)phosphoriques de pyrimidine-5-yle de formule (I)

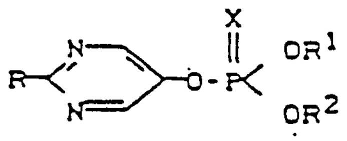

(I)

dans laquelle

R représente l'hydrogène, un groupe alkyle en $C_1$-$C_4$, cycloalkyle en $C_3$-$C_6$, alcoxy en $C_1$-$C_4$, alkylthio en $C_1$-$C_4$, alkylamino en $C_1$-$C_4$, di-(alkyl en $C_1$-$C_4$)-amino ou phényle,
$R^1$ représente un groupe alkyle en $C_1$-$C_4$,
$R^2$ représente un groupe fluoroalkyle en $C_1$-$C_4$ comportant 1 à 6 atomes de fluor et
X represente l'oxygène ou le soufre.

2. Composés de formule (I), selon la revendication 1, dans laquelle

R représente l'hydrogène, un groupe alkyle en $C_1$-$C_4$, cycloalkyle en $C_3$-$C_6$, alcoxy en $C_1$-$C_4$, alkylthio en $C_1$-$C_4$, alkylamino en $C_1$-$C_4$, di-(alkyl en $C_1$-$C_4$)-amino ou phényle,
$R^1$ représente un groupe alkyle en $C_1$-$C_4$,
$R^2$ représente un groupe trifluorométhyle, 2,2,2-trifluoroethyle, 2,2,3,3-tétrafluoropropyle et 1,1, 1,3,3,3-hexafluoro-2-propyle et
X représente l'oxygène ou le soufre.

3. Composés de formule (I), selon la revendication 1, dans laquelle

R représente l'hydrogène, un groupe alkyle en $C_1$-$C_4$, cyclohexyle, méthoxy, méthylthio, i-propylthio, diméthylamino ou diéthylamino ou phényle,
$R^1$ représente un groupe méthyle, éthyle ou isopropyle,
$R^2$ représente un groupe 2,2,2-trifluoroéthyle, 2,2,3,3-tétrafluoropropyle ou 1,1,1,3,3,3-hexafluoro-2-propyle et
X représente l'oxygène ou le soufre, de préference le soufre.

4. Composés répondant aux formules

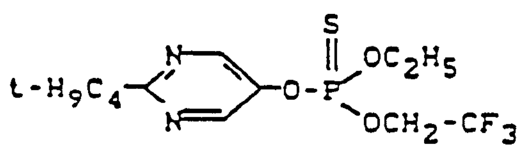

et

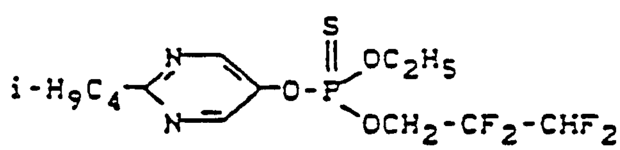

5. Procédé pour la production d'esters (thiono) phosphoriques de pyrimidine-5-yle de formule (I),

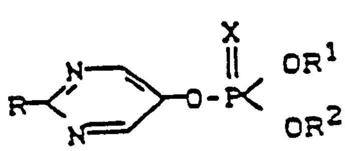

(I)

dans laquelle

R représente l'hydrogène, un groupe alkyle en $C_1$-$C_4$, cycloalkyle en $C_3$-$C_6$, alcoxy en $C_1$-$C_4$, alkylthio en $C_1$-$C_4$, alkylamino en $C_1$-$C_4$, di-(alkyl en $C_1$-$C_4$)-amino ou phényle,

$R^1$ représente un groupe alkyle en $C_1$-$C_4$,

$R^2$ représente un groupe fluoroalkyle en $C_1$-$C_4$ comportant 1 à 6 atomes de fluor et

X représente l'oxygène ou le soufre, caractérisé en ce qu'on fait réagir des 5-hydroxypyrimidines de formule (II),

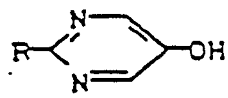

(II)

dans laquelle

R a les significations mentionnées plus haut, ou les sels alcalins, alcalins-terreux ou d'ammonium correspondants, avec des halogénures de formule (III),

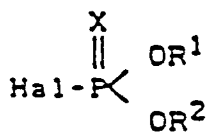

(III)

dans laquelle

X, $R^1$ et $R^2$ ont les significations données plus haut et Hal représente un halogène,

le cas echéant en présence d'un capteur d'acide ou le cas échéant en présence d'un diluant.

6. Produit pour lutter contre les animaux nuisibles caractérisé en ce qu'il contient au moins un des composés de formule (I) selon les revendications 1 ou 5.

7. Utilisation de composés de formule (I) selon les revendications 1 ou 5 pour lutter contre les animaux nuisibles, en particulier contre les insectes et les nématodes.

8. Procédé pour lutter contre les animaux nuisibles caractérisé en ce qu'on laisse agir des composés de formule (I) selon les revendications 1 ou 5 sur des animaux nuisibles, de préférence sur des insectes ou des nématodes, ou sur leur espace vital.

9. Procédé de production de produits pour lutter contre les animaux nuisibles, caractérisé en ce qu'on mélange des composés répondant à la formule (I) selon les revendications 1 ou 5 à des produits diluants et/ou à des agents tensioactifs.